# DEMANDE DE BREVET EUROPEEN

(11) **EP 1 149 552 A1**
(43) Date de publication de la demande: **31.10.2001**
(21) Numéro de dépôt: 00401192.0
(22) Date de dépôt: 28.04.2000
(51) Int. Cl.: A47K 10/16, A41B 15/00, B31D 1/04, D21H 27/40

(54) **Produit en papier absorbant tel que serviette ou mouchoir, procédés pour fabriquer un tel produit et dispositifs pour la mise en oeuvre de tels procédés**

(71) Demandeur: Georgia-Pacific France, 68320 Kunheim (FR)
(72) Inventeur: Lefebvre du Grosriez, Carol, 68127 Oberhergheim (FR); Neveu, Jean-Louis, 68000 Colmar (FR)
(74) Mandataire: Cortier, Sophie

(57) **Abrégé**

L'invention concerne un produit en papier absorbant (1) tel qu'une serviette ou un mouchoir comprenant au moins deux plis d'ouate de cellulose (10) et (11) superposés et associés, découpés ou prédécoupés au format souhaité et liés entre eux le long d'au moins une partie d'une zone périphérique (2).

Selon l'invention, les plis (10) et (11) sont liés le long de ladite partie par des motifs de marquage (9) sans collage et au moins un pli comprend des motifs de gaufrage (12) dans une zone centrale (7).

L'invention trouve application dans les papiers à usage sanitaire et domestique, en particulier les serviettes et mouchoirs en papier jetables.

## Description

L'invention concerne un produit en papier absorbant à usage sanitaire et domestique. Elle vise plus particulièrement des produits découpés ou prédécoupés en formats tels que des mouchoirs en papier, des serviettes de table en papier jetables, ou des produits similaires. Ces produits comprennent au moins deux plis ou feuilles d'ouate de cellulose, superposés et associés par tout moyen connu.

Les termes "marquage" et "gaufrage" mentionnés dans la description qui suit, ont les significations suivantes.

Le "marquage" consiste à comprimer certaines parties d'un pli ou d'une feuille constituée de plusieurs plis d'ouate de cellulose, en formant des zones compactées et en réduisant significativement l'épaisseur du pli ou de la feuille dans ces zones sans former de relief correspondant sur la face opposée. Lorsque plusieurs plis sont marqués ensemble, en particulier deux plis, ces derniers sont associés et liés.

Le produit marqué comprend des zones comprimées d'épaisseur réduite formant des motifs de marquage sur le produit.

Le "gaufrage" consiste à créer sur un pli d'ouate de cellulose ou plusieurs plis superposés, des reliefs sur une première face avec des dépressions correspondantes sur la face opposée des plis, en augmentant l'épaisseur du ou des plis superposés. Les reliefs et dépressions ainsi obtenus forment des motifs de gaufrage en surface des produits en papier. Cette technique peut également permettre d'obtenir une association des plis.

La plupart des serviettes en papier présentes sur le marché, ont des bordures liées par gaufrage avec une augmentation de l'épaisseur dans les zones périphériques assemblées.

Parmi les serviettes de table apparues plus récemment sur le marché, certaines présentent une liaison mécanique des plis localisée au niveau des bords et obtenue exclusivement par marquage.

Un des procédés de marquage consiste à faire passer deux plis d'ouate de cellulose entre un cylindre gravé en acier et un contre-cylindre lisse en acier, le cylindre gravé comportant des zones en relief, le plus souvent sous forme de picots sur une partie de sa surface correspondant aux bords de la serviette. La pression exercée par les cylindres est suffisante pour lier les plis. Le produit découpé obtenu comporte sur une de ses faces, des bordures avec des parties comprimées ou surfaces compactées dans lesquelles l'épaisseur est significativement réduite. Il n'y a pas de relief correspondant sur l'autre face du produit. Ces produits se distinguent par une absence de surépaisseur. Ils ont une zone centrale plate, sans surépaisseur au centre. Ils ne présentent pas de gonflant et n'ont pas de "main", propriétés cependant recherchées pour des produits destinés à l'essuyage de la peau.

Une autre technique de marquage pour lier des bordures de mouchoirs est décrite dans la demande WO-A-95/27429.

Elle consiste à marquer chacune des faces du produit au moyen de deux cylindres gravés comportant chacun des parties en relief sous forme de picots, les picots d'un cylindre étant en position pointe-pointe par rapport aux picots de l'autre cylindre. Les deux plis sont ainsi liés sous l'action du marquage et la pression exercée par les cylindres, par des points. Les deux faces externes du produit sont enfoncées au niveau des points vers l'intérieur de la feuille, chaque point sur une face correspondant à un autre point sur l'autre face.

Ce procédé nécessite une très grande précision et un niveau de contrôle élevé.

Les produits obtenus présentent les mêmes inconvénients que ceux décrits pour le procédé de marquage classique décrit plus haut, à savoir qu'ils sont plats dans la zone centrale.

La demande de brevet européen A-0 674 990 décrit des serviettes de table en papier qui sont gaufrées. Le gaufrage permet de créer sur une partie de la surface de chacun des plis formant le produit, des motifs en relief avec des dépressions correspondantes sur la face opposée des plis. De ce fait, le produit qui est gaufré, augmente en épaisseur.

Dans l'art antérieur cité dans la demande EP-A-0 674 990, trois possibilités sont présentées : le gaufrage uniquement des bordures de la serviette, le gaufrage de la surface de la serviette dans sa totalité et le gaufrage de bords avec d'autres points de gaufrage sélectionnés dans la partie centrale entre les bords.

Pour la première possibilité, les serviettes une fois pliées en quatre présentent une certaine dissymétrie. Lorsqu'elles sont empilées et emballées, les paquets ont tendance à se déformer. De plus, les serviettes ont un toucher désagréable dans les zones de bordures du fait du relief asymétrique du gaufrage.

Pour la seconde possibilité, il est difficile d'atteindre des pressions élevées pour gaufrer toute la surface de la serviette si bien que la liaison mécanique des plis est moins bonne sans compter la perte de douceur entraînée par le gaufrage de toute la surface.

La troisième possibilité est un compromis entre les deux autres, avec une répartition sélective des points de gaufrage dans la partie centrale de la serviette.

Mais les inconvénients sont une combinaison de ceux évoquées dans les deux possibilités précédentes.

La solution proposée par cette demande antérieure EP-A-0 674 990 pour éviter ces différents inconvénients, est une serviette ayant un motif de gaufrage fonctionnel comprenant un gaufrage de bordure et un motif de gaufrage formant décor situé sur un des bords pliés opposé au gaufrage de bordure. Une surface d'essuyage non gaufrée subsiste. En fait, les parties de la serviette qui vont former les bords intérieurs pliés, sont gaufrées afin que le produit une fois plié ait une épaisseur relativement constante, ce qui permet d'éviter les problèmes de déformation des paquets de serviettes empilées.

Une autre technique d'association des bords d'un produit découpé tel qu'un mouchoir, est révélée par la demande WO-A-94/12343. Elle comprend la combinaison d'un gaufrage et d'un collage, l'association des plis étant assurée par le collage des bords. Mais le procédé pour fabriquer de tels produits est délicat dès lors qu'un adhésif est utilisé. Et l'adhésif rigidifie le produit.

L'invention a pour but de pallier l'ensemble des inconvénients cités précédemment, en fournissant un produit en papier absorbant découpé ou prédécoupé en format, comprenant au moins deux plis bien associés, ce produit étant souple, présentant du gonflant et une bonne main dans sa zone centrale, tout en restant agréable au toucher. En effet, on recherche à obtenir des produits ayant une plus grande épaisseur perçue par rapport à la plupart des produits classiques relativement plats dans leur zone centrale. Cette épaisseur perçue peut notamment découler de la différence d'épaisseur entre les bordures ou zone périphérique de la serviette et la zone centrale.

L'invention a également pour but de fournir des procédés simples de fabrication du produit selon l'invention permettant de combiner différentes natures et types de motifs.

L'invention a encore pour but de fournir des dispositifs permettant la mise en oeuvre de ces procédés.

Pour rappel, les termes "marquage" et "gaufrage" utilisés dans la description de l'invention qui suit, ont également les significations suivantes.

Le "marquage" consiste à comprimer certaines parties d'un pli ou de plusieurs plis d'ouate de cellulose, en formant des zones compactées et en réduisant significativement l'épaisseur du pli ou des plis dans ces zones sans former de relief correspondant sur la face opposée. Lorsque plusieurs plis sont marqués ensemble, en particulier deux plis, ces derniers sont associés et liés dans les zones compactées ou marquées, ce qui est le cas dans la présente invention.

Le produit marqué comprend des zones comprimées d'épaisseur réduite formant des motifs de marquage sur le produit.

L'invention englobe plusieurs procédés de marquage et exclut le marquage associé à un collage.

Le procédé de marquage de bordure le plus classique consiste à marquer et lier au moins deux plis en faisant passer les deux plis entre un cylindre gravé en matériau dur du type en acier dont les motifs de gravure sont constitués de picots et un contre-cylindre lisse, également en matériau dur, du type en acier et en appliquant une pression suffisante.

Un autre procédé consiste à marquer un motif formant filigrane sur un produit en papier absorbant, en déformant sous contrainte le produit par au moins un passage entre un cylindre gravé dur et non déformable dont les motifs de gravure sont de type linéaire et un cylindre récepteur d'une dureté d'au moins 40 Shore D.

Le produit ainsi marqué a la particularité d'avoir des surfaces marquées lisses, brillantes et translucides formant des filigranes, les surfaces non marquées étant mates. Ce produit et ce procédé sont décrits plus en détails dans la demande WO-A-97/20107.

Le "gaufrage" consiste à créer sur un pli d'ouate de cellulose ou plusieurs plis superposés, des reliefs sur une première face avec des dépressions correspondantes sur la face opposée des plis, en augmentant l'épaisseur du ou des plis superposés. Les reliefs et dépressions ainsi obtenus forment des motifs de gaufrage en surface des produits en papier.

Différentes techniques de gaufrage sont possibles. L'invention exclut toutefois, en ce qui concerne le gaufrage de plusieurs plis, un gaufrage combiné à un collage.

Un des procédés de gaufrage consiste à faire passer un ou plusieurs plis entre un cylindre gravé en matériau dur comprenant des motifs de gravure mâles et une contrepartie gravée en matériau dur comprenant des motifs de gravure femelles correspondants.

Un autre procédé consiste à faire passer un ou plusieurs plis entre un cylindre en matériau dur par exemple en acier, gravé, comportant des motifs de gravure mâles et un contre-cylindre en matériau déformable tel que papier ou caoutchouc. Le contre-cylindre se déforme en épousant les motifs de gravure mâles du cylindre gravé. Le résultat obtenu est voisin de celui obtenu par le premier procédé décrit ci-dessus.

D'autres procédés de gaufrage existent combinant plusieurs cylindres gravés en matériau dur non déformable avec des cylindres en matériau déformable non gravés. Plusieurs plis peuvent ainsi être gaufrés puis associés.

Suivant la position des cylindres gravés l'un par rapport à l'autre, les parties en relief des motifs de gaufrage d'un pli peuvent venir se positionner en face des parties en relief des motifs de gaufrage d'un autre pli ; cette position est qualifiée de pointe-pointe. Elles peuvent aussi être décalées par rapport aux parties en relief des motifs de gaufrage de l'autre pli ; on parle alors de position "nested" : une partie en creux d'un motif de gaufrage d'un pli venant se placer dans une partie en relief du motif de gaufrage de l'autre pli.

Tout type de gaufrage peut être envisagé dans la présente invention.

De préférence, le procédé de gaufrage utilisé consiste à faire passer un ou plusieurs plis entre un cylindre gaufreur ou cylindre gravé en matériau dur, du type en acier, comprenant des motifs de gravure et un contre-cylindre ou cylindre récepteur lisse, en matériau déformable tel que caoutchouc.

En général, chacun des plis est gaufré séparément puis les deux plis gaufrés sont superposés. Les deux plis peuvent aussi être gaufrés ensemble et être associés partiellement par le gaufrage.

Dans un des modes de réalisation de l'invention décrit plus loin, le marquage des plis peut s'effectuer sur deux plis superposés dont l'un est déjà gaufré et comporte des motifs de gaufrage. Les motifs de marquage sont dans ce cas en partie ou totalement identiques aux motifs de gaufrage.

L'invention a pour objet un produit en papier absorbant tel qu'une serviette ou un mouchoir comprenant au moins deux plis d'ouate de cellulose superposés et associés, découpés ou prédécoupés au format souhaité et liés entre eux le long d'au moins une partie d'une zone périphérique.

Selon une caractéristique essentielle de l'invention, les plis sont liés le long de ladite partie par des motifs de marquage sans collage et au moins un pli comprend des motifs de gaufrage dans la zone centrale.

Selon une autre caractéristique de l'invention, les deux plis comprennent des motifs de gaufrage identiques ou différents dans la zone centrale.

Selon une caractéristique avantageuse de l'invention, dans la zone périphérique, au moins un des plis ne comprend que des motifs de marquage.

Selon une autre caractéristique avantageuse de l'invention, dans la zone périphérique, au moins un des plis comprend des motifs de marquage en partie ou totalement identiques aux motifs de gaufrage.

Selon encore une caractéristique de l'invention, les motifs de marquage dans la zone périphérique forment des filigranes.

Selon une caractéristique préférée de l'invention, la zone centrale d'un pli comprend un décor formé par la combinaison de parties gaufrées et de parties non gaufrées.

L'invention a aussi pour objet un procédé de fabrication du produit selon l'invention, caractérisé en ce qu'il consiste à :
- a1) gaufrer un premier pli d'ouate de cellulose entre un premier cylindre gravé et un premier contre-cylindre au moins dans une zone centrale du format,
- b) superposer un second pli et lier les deux plis le long d'une zone périphérique du format par marquage entre le premier cylindre gravé ou non gravé dans les zones correspondant à la zone périphérique et un second cylindre en matériau dur, respectivement non gravé ou gravé dans les zones correspondant à la zone périphérique, de manière à obtenir une liaison des plis, et
- c) découper ou prédécouper en formats.

Selon une autre caractéristique essentielle de l'invention, le procédé comprend entre l'étape a1) et l'étape b), une étape supplémentaire a2) consistant à gaufrer le second pli entre le second cylindre en matériau dur, gravé au moins dans une zone correspondant à la zone centrale du format, et un second contre-cylindre.

L'invention a également pour objet un procédé, caractérisé en ce qu'il consiste à :
a1) gaufrer simultanément les premier et second plis entre un premier cylindre gravé comprenant des zones gravées correspondant aux motifs de gaufrage de la zone centrale du format et un premier contre-cylindre comprenant des zones de surface non gravées en matériau déformable ou des zones de surface gravées en acier ou matériau similaire venant se positionner en face des zones gravées du premier cylindre gravé correspondant aux motifs de gaufrage de la zone centrale du format,
b) marquer simultanément à l'étape a1) les premier et second plis entre le premier cylindre comprenant des zones gravées ou non gravées correspondant aux motifs de marquage de la zone périphérique et le premier contre-cylindre comprenant des zones de surface dures respectivement non gravées ou gravées venant se positionner en face des zones respectivement gravées ou non gravées du premier cylindre, et
c) découper ou prédécouper en formats.

L'invention a encore pour objet des dispositifs pour la mise en oeuvre des procédés selon l'invention.

Selon une caractéristique essentielle de l'invention, un premier dispositif comprend :
- un premier groupe de cylindres comprenant un premier cylindre gravé en matériau dur et un premier contre-cylindre en matériau déformable, le premier cylindre gravé comprenant une première zone gravée correspondant aux motifs de gaufrage de la zone centrale du format pour le premier pli et présentant une hauteur de gravure h₁ et une seconde zone gravée correspondant aux motifs de marquage de la zone périphérique du format et présentant une hauteur de gravure h₂, et,
- un second groupe de cylindres comprenant un second cylindre gravé en matériau dur et un second contre-cylindre en matériau déformable, le second cylindre gravé comprenant une première zone gravée correspondant aux motifs de gaufrage de la zone centrale du format pour le second pli et présentant une hauteur de gravure h₃ et une seconde zone non gravée correspondant à la zone périphérique du format et présentant une hauteur h₄, la somme des hauteurs h₂ et h₄ étant supérieure à la somme des hauteurs h₁ et h₃.

Selon une caractéristique essentielle de l'invention, un autre dispositif comprend :
- un premier groupe de cylindres comprenant un premier cylindre gravé en matériau dur et un contre-cylindre en matériau déformable, le premier cylindre gravé comprenant une première zone gravée correspondant aux motifs de gaufrage de la zone centrale du format pour le premier pli et présentant une hauteur de gravure h₁ ou h'₁ et une seconde zone gravée correspondant aux motifs de marquage de la zone périphérique du format et présentant une hauteur de gravure h₂ ou h'₂, et
- un second cylindre en matériau dur comprenant une première zone lisse correspondant à la zone centrale du format, présentant une hauteur de gravure h₃ ou h'₃ et une seconde zone plane correspondant en tout ou partie à la zone périphérique et présentant une hauteur de gravure h₄ ou h'₄, cette seconde zone étant destinée à se positionner en face des zones gravées du premier cylindre gravé correspondant aux motifs de marquage, la somme des hauteurs h₂ ou h'₂ et respectivement h₄ ou h'₄ étant strictement supérieure à la somme des hauteurs h₁ ou h'₁ et respectivement h₃ ou h'₃.

Selon une caractéristique essentielle d'un autre dispositif selon l'invention, ce dernier comprend :
- un premier groupe de cylindres comprenant un premier cylindre gravé en matériau dur et un premier contre-cylindre en matériau déformable, le premier cylindre gravé comprenant une première zone gravée correspondant aux motifs de gaufrage de la zone centrale du format pour le premier pli et présentant une hauteur de gravure h"₁ et une seconde zone lisse correspondant à la zone périphérique du format présentant une hauteur de gravure h"₂, h"₂ étant strictement inférieure à h"₁,
- un second cylindre gravé en matériau dur comprenant une première zone lisse correspondant à la zone centrale du format présentant une hauteur de gravure h"₃ et une seconde zone gravée correspondant aux motifs de marquage de la zone périphérique du format et présentant une hauteur de gravure h"₄, h"₃ étant strictement inférieure à h"₄ et la somme des hauteurs h"₂ et h"₄ étant strictement supérieure à la somme des hauteurs h"₁ et h"₃.

Selon une caractéristique essentielle d'encore un autre dispositif selon l'invention, ce dernier comprend :
- un premier cylindre gravé en matériau dur comprenant des zones gravées correspondant aux motifs de gaufrage de la zone centrale du format et des zones gravées ou non gravées correspondant aux motifs de marquage de la zone périphérique du format, et
- un premier contre-cylindre comprenant des zones de surface non gravées en matériau déformable ou des zones de surface gravées en matériau dur destinées respectivement à se positionner en face des zones gravées du premier cylindre gravé correspondant aux motifs de gaufrage de la zone centrale du format, et des zones de surfaces dures non gravées ou gravées destinées à se positionner en face des zones gravées ou non gravées du premier cylindre dans des zones correspondant aux motifs de marquage de la zone périphérique du format,

D'autres détails et avantages de l'invention apparaîtront plus clairement à la lecture détaillée de la description qui suit en référence aux dessins dans lesquels :
- la figure 1 est une représentation schématique d'une vue de dessus d'un produit en format découpé selon l'invention ;
- la figure 2A est une coupe partielle schématique selon la ligne II-II du produit selon la figure 1 ;
- la figure 2B est une variante du produit représenté à la figure 2A ;
- les figures 3, 4A à 4G, 5A et 5B représentent chacune, une coupe partielle schématique d'autres modes de réalisation du produit selon l'invention ;
- la figure 6 illustre un mode de réalisation du procédé selon l'invention et un dispositif pour sa mise en oeuvre ;
- la figure 6A représente le premier cylindre en matériau dur gravé du dispositif suivant la figure 6 ;
- la figure 6B représente le contre-cylindre en matériau déformable du dispositif suivant la figure 6 ;
- la figure 6C est une représentation schématique générale d'une vue partielle du premier cylindre gravé en matériau dur appliqué contre le second cylindre gravé en matériau dur illustrant les hauteurs des zones gravées ;
- la figure 6D est une représentation schématique d'une coupe partielle transversale du premier cylindre gravé appliqué contre le second cylindre en matériau dur lisse suivant la ligne VI-VI de la figure 6 ;
- la figure 7 représente une alternative du dispositif représenté à la figure 6 ;
- la figure 7A est une représentation schématique d'une coupe partielle transversale du premier cylindre gravé appliqué contre le second cylindre dur suivant la ligne VII-VII de la figure 7 ;
- la figure 8 illustre un autre mode de réalisation du procédé selon l'invention et le dispositif correspondant permettant sa mise en oeuvre ;
- la figure 9 représente une alternative du dispositif représenté à la figure 8 ;
- la figure 9A est une représentation schématique d'une coupe partielle transversale du premier cylindre gravé appliqué contre le second cylindre dur suivant la ligne IX-IX de la figure 9 ;
- la figure 10 représente une autre alternative du dispositif représenté à la figure 8 ;
- la figure 10A est une représentation schématique d'une coupe partielle transversale du premier cylindre gravé appliqué contre le second cylindre dur gravé suivant la ligne X-X de la figure 10 ;
- la figure 11 illustre un autre mode de réalisation du procédé selon l'invention ainsi qu'un dispositif pour sa mise en oeuvre ;
- les figures 11A à 11D sont des représentations schématiques de coupes partielles transversales du premier cylindre gravé appliqué contre le second cylindre gravé suivant 1a ligne XI-XI de la figure 11 ;
- la figure 12 représente une variante du dispositif représenté à la figure 11 ;
- la figure 13 illustre une variante du procédé représenté en figure 11, dans laquelle un troisième pli est introduit ;
- la figure 14 représente encore un autre mode de réalisation du procédé selon l'invention et du dispositif pour sa mise en oeuvre ;
- la figure 14A représente le premier cylindre gravé du dispositif représenté en figure 14 ; et
- la figure 15 représente une variante du dispositif représenté en figure 14.

Le produit selon l'invention est un produit en papier absorbant, plus précisément en ouate de cellulose. Il est découpé en format par exemple carré ou rectangulaire.

Ce produit est un mouchoir ou une serviette de table en papier ou tout produit similaire.

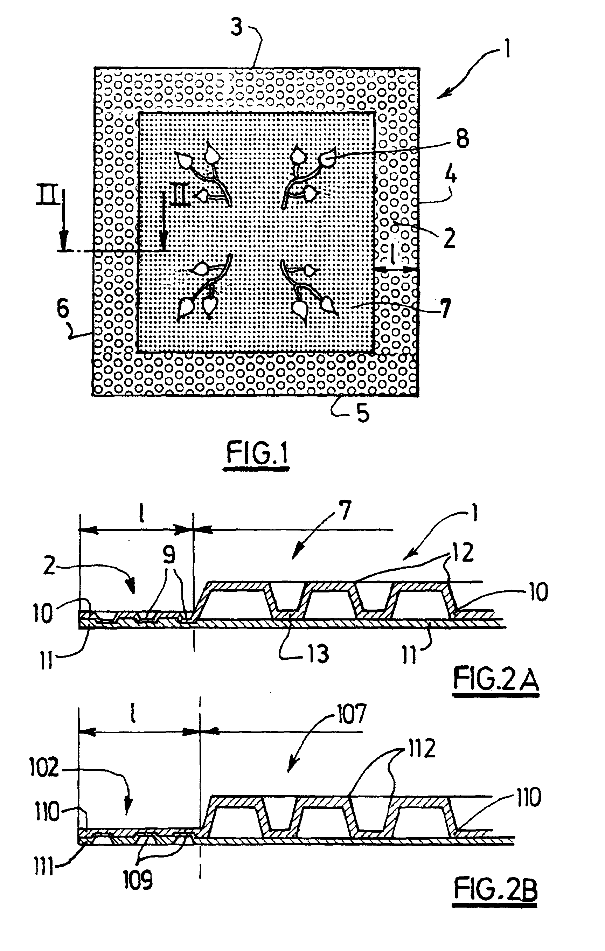

Il comprend au moins deux plis d'ouate de cellulose superposés et associés. Le produit qui est décrit ci-après et illustré par les figures 1 à 5B, comprend deux plis d'ouate de cellulose.

La figure 1 représente schématiquement, vu de dessus, un produit découpé 1 : une serviette de table ou un mouchoir, ici de forme carrée. Il comprend une zone périphérique 2 formant une bande d'une largeur déterminée ℓ, le long des bords 3, 4, 5 et 6 du produit 1, et une zone centrale 7 entourée par la zone périphérique 2.

Les deux plis sont liés le long de cette zone périphérique 2 de largeur ℓ par des motifs de marquage sans collage. Suivant la technique de marquage utilisée, le motif de marquage peut être constitué de formes simples ou complexes. Il peut comprendre de petites surfaces en forme de disques, losanges ou autres, réalisées par un marquage de type classique. Il peut aussi être constitué d'un ensemble de lignes, traits, courbes formant un dessin et définissant un motif décoratif lorsqu'on utilise la technique de marquage formant un filigrane telle que décrite dans la demande WO 97/20107.

La figure 1 illustre un mode préféré de réalisation du produit comprenant un motif de gaufrage réparti sur toute la surface de cette zone centrale sous la forme de petites surfaces représentées ici par des points. De préférence, la zone centrale comprend également des parties non gaufrées 8 formant elles-mêmes des décors et créant des zones plus douces au contact de la peau, pour les produits destinés à l'essuyage de la peau en tant que serviette ou mouchoir. Suivant un autre mode de réalisation préféré, les motifs de gaufrage de la zone centrale forment un décor et alternent avec des zones non gaufrées. Les zones non gaufrées sont réparties dans la zone centrale du format de forme carrée de manière à être symétriques de par et d'autre des médianes du format. De ce fait, les produits une fois pliés en quatre présente une certaine symétrie.

Dans le produit selon l'invention, les plis sont liés mécaniquement dans 1a zone périphérique et comportent une zone centrale, apportant du gonflant et de la main au produit. Les différents modes de réalisation du produit, sont illustrés par les figures 2A, 2B, 3, 4A à 4G, 5A et 5B représentant des coupes transversales.

Les éléments correspondant à chaque figure portent la même référence augmentée chaque fois d'une centaine.

En référence à la figure 2A, la zone périphérique 2 de largeur ℓ, comprend des motifs de marquage 9. Au niveau de ces motifs de marquage, l'épaisseur du produit est réduite. Le premier pli est enfoncé vers l'intérieur du produit. Les fibres du premier pli 10 ont été écrasées et dans une moindre mesure celles du second pli 11, assurant de ce fait la liaison des deux plis. Dans la zone centrale 7, le premier pli 10 est gaufré suivant des motifs de gaufrage 12 augmentant ainsi l'épaisseur totale du produit dans cette zone. Les parties les plus étroites 13 des reliefs des motifs de gaufrage sont orientées vers l'intérieur des plis afin de limiter la perte de douceur dans ces zones gaufrées.

La figure 2B est une variante du produit représenté à la figure 2A dans laquelle les motifs de marquage 109 de la zone périphérique 102 apparaissent au niveau du second pli 111 qui est enfoncé vers l'intérieur du produit. Le premier pli 110 est quant à lui également légèrement enfoncé. C'est le premier pli 110 qui comprend les motifs de gaufrage 112 dans la zone centrale 107.

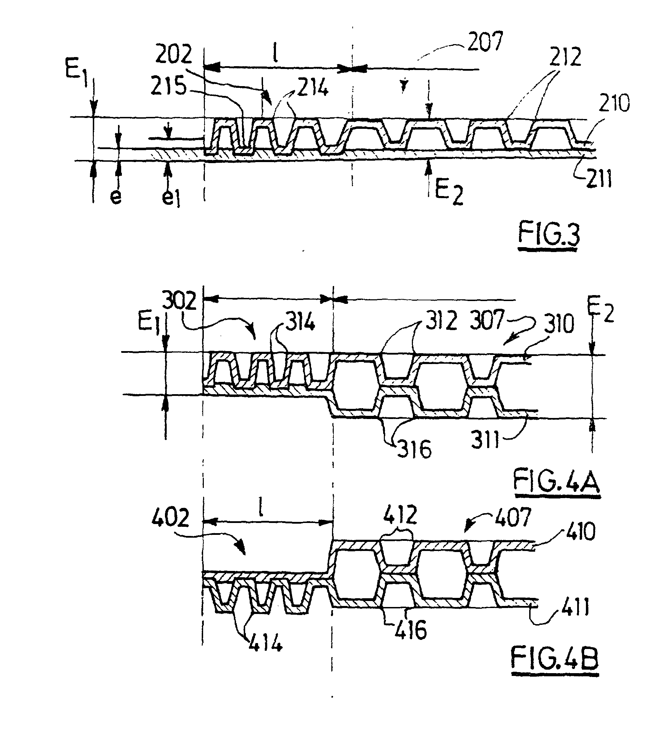

Sur la figure 3, le produit dans la zone périphérique 202 de largeur ℓ comprend des motifs 214 qui sont à la fois des motifs de gaufrage et des motifs de marquage. L'épaisseur globale E₁ du produit est plus grande dans la zone périphérique par rapport à l'épaisseur e₁ des deux plis simplement superposés sans gaufrage ni marquage. Dans la partie en creux 215 du motif 214, le pli 210 est enfoncé vers l'intérieur du produit, l'épaisseur du produit e dans cette partie en creux qui correspond à la liaison des deux plis assurée par le marquage, est réduite par rapport à l'épaisseur e₁ des deux plis simplement superposés sans gaufrage ni marquage. Sur cette figure 3, dans la zone périphérique 202, les motifs de marquage sont totalement identiques aux motifs de gaufrage. Suivant un autre mode de réalisation non représenté, les motifs de marquage peuvent également être seulement en partie identiques aux motifs de gaufrage. En d'autres termes, la zone périphérique peut comprendre des motifs supplémentaires qui seront des motifs de gaufrage seuls. La zone centrale 207 reste inchangée et comprend uniquement des motifs de gaufrage 212.

La figure 4A illustre un autre mode de réalisation du produit selon l'invention. La zone périphérique comprend des motifs de marquage et gaufrage 314 similairement à la figure 3. Mais dans la zone centrale, les deux plis comprennent chacun des motifs de gaufrage. Le pli 310 comprend des motifs de gaufrage 312 et le pli 311 comprend des motifs de gaufrage 316. Sur cette figure 4A, les motifs de gaufrage 312 et 316 sont identiques pour les deux plis. Les parties en creux des motifs de gaufrage d'un pli étant en position pointe-pointe avec les parties en creux des motifs de l'autre pli. Les deux plis dans la zone centrale sont parfaitement symétriques sur la coupe transversale du produit. Sur 1a figure 4A, l'épaisseur globale E₂ du produit dans la zone centrale est supérieure ici à l'épaisseur E₁ du produit dans la zone périphérique. Dans le cas de la figure 3, E₂ est sensiblement égale à E₁.

Sur la figure 4B, à l'inverse de la figure 4A, dans la zone périphérique 402, c'est le second pli 411 qui comprend des motifs de marquage identiques aux motifs de gaufrage 414, ces motifs de marquage étant imprimés principalement sur le second pli 411 et secondairement sur le premier pli 410.

Dans la zone centrale 407, les motifs de gaufrage 412 et 416 de chacun des plis 410 et 411 sont identiques à ceux 312 et 316 du produit représenté à la figure 4A.

Suivant un autre mode de réalisation non représenté, les motifs de gaufrage de la zone centrale peuvent aussi être différents entre les deux plis qui ne seront plus symétriques en coupe transversale.

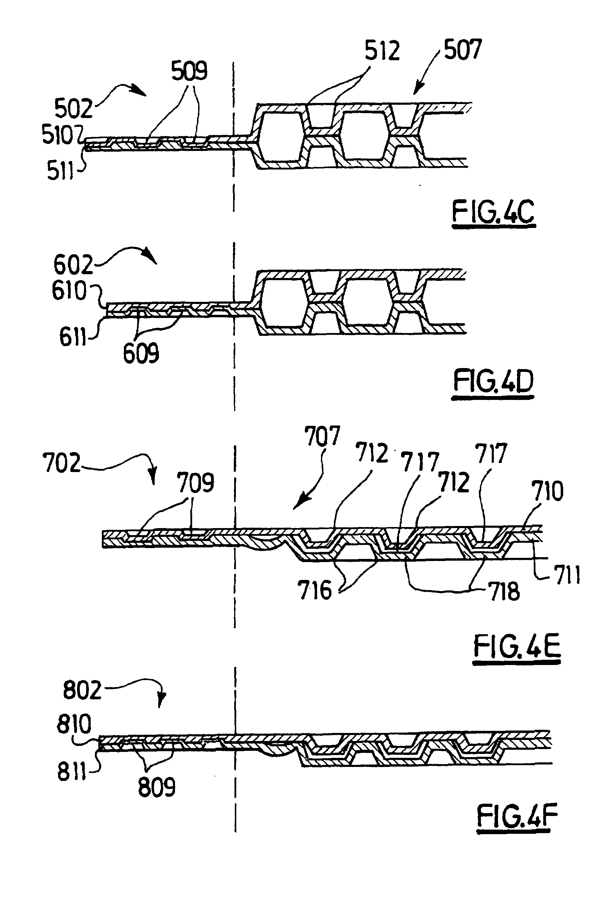

Les produits représentés aux figures 4C et 4D diffèrent des produits représentés aux figures 4A et 4B de par leur zone périphérique 502 et 602 qui ne comprend qu'un motif de marquage 509 et 609, imprimé respectivement principalement sur le premier pli 510, secondairement sur le second pli 511 et principalement sur le second pli 611 et secondairement sur le premier pli 610. Sur ces figures, les deux plis sont aussi symétriques dans la zone centrale en coupe transversale.

Les deux plis peuvent encore être dissymétriques en coupe transversale dans la zone centrale.

Un tel produit est représenté à la figure 4E. Par exemple, dans la zone centrale 707, les parties en creux des motifs de gaufrage 712 du pli 710 peuvent se positionner ou s'imbriquer dans les parties en relief des motifs de gaufrage 716 de l'autre pli 711, on parle alors de position "nested".

Les deux plis peuvent ne pas être en contact sur toute la surface déformée des plis, tel que le représente la figure 4E : la partie 717 du pli 710 ne vient pas en contact de la partie 718 du pli 711.

Dans cette représentation, pour les motifs de marquage 709 de la zone périphérique 702, c'est le premier pli 710 qui est d'abord enfoncé. La figure 4F illustre une variante dans laquelle le second pli 811 est d'abord enfoncé au niveau des motifs de marquage 809 pour la zone périphérique 802.

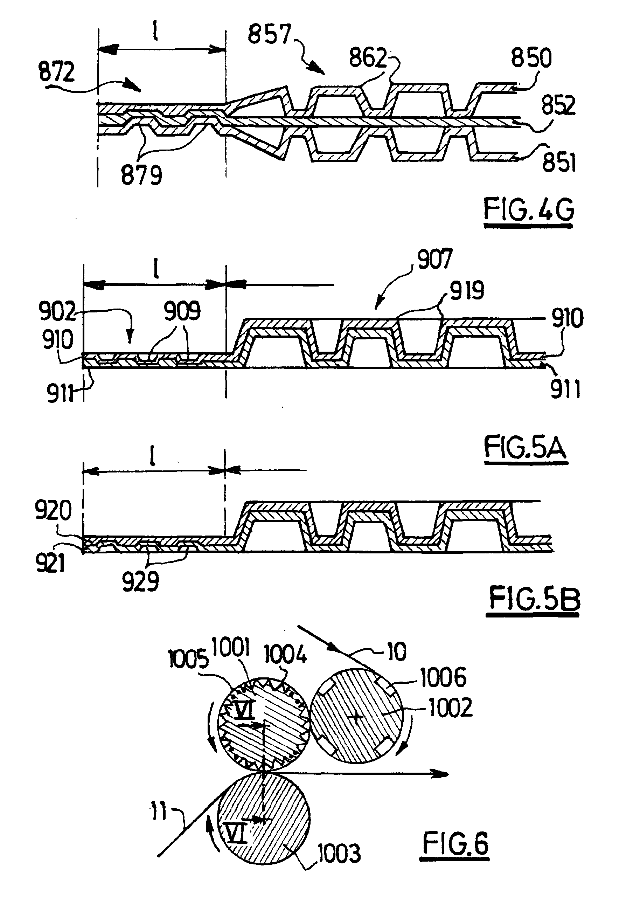

La figure 4G illustre un produit selon l'invention comprenant trois plis : deux plis extérieurs 850 et 851 gaufrés et un pli central 852 non gaufré. Dans la zone centrale 857, les deux plis 850 et 851 comprennent des motifs de gaufrage 862 en position pointe-pointe. Dans la zone périphérique 872 de largeur ℓ, les trois plis 850, 851 et 852 comprennent des motifs de marquage 879.

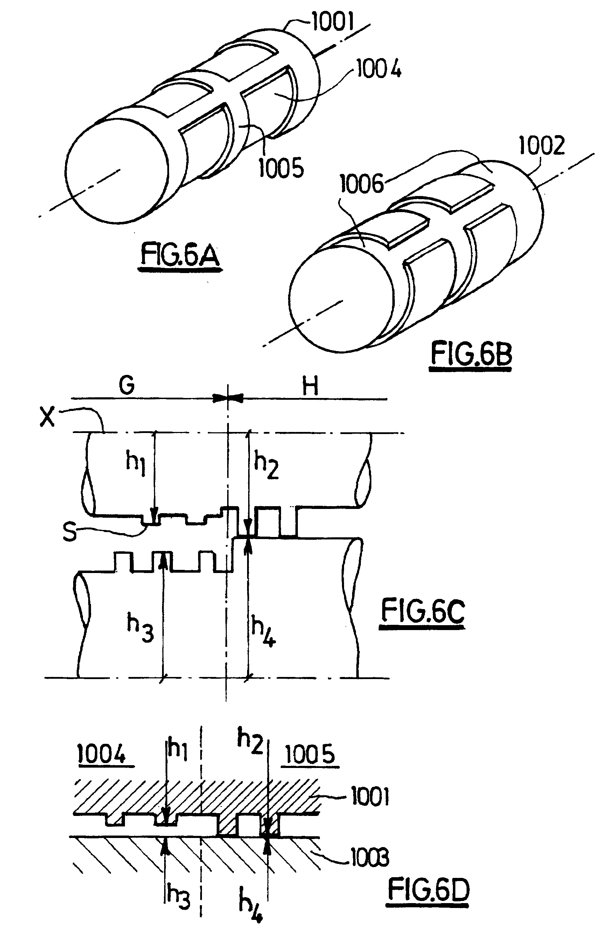

La figure 5A illustre un produit dans lequel la zone périphérique 902 comprend des motifs de marquage tels que ceux décrits pour le produit représenté à la figure 2A. Pour ce mode de réalisation, les deux plis 910 et 911 dans la zone centrale, comprennent des motifs de gaufrage 919 et sont associés par ces motifs de gaufrage. Sur cette figure 5A, dans la zone périphérique, le pli 910 comprend les motifs de marquage 909. D'une autre manière, il est également possible de marquer le pli 921 tel que représenté en figure 5B. Les motifs de marquage 929 apparaissent en surface du pli 921.

Les produits décrits précédemment peuvent comporter dans leur zone centrale non seulement des motifs de gaufrage mais également des motifs de marquage formant filigrane, qui constituent d'autres décors.

Le procédé selon l'invention a l'avantage de fournir un produit en format comprenant une combinaison de motifs de marquage et de motifs de gaufrage, la zone périphérique comprenant au moins des motifs de marquage et la zone centrale, au moins des motifs de gaufrage. Ce produit comprend au moins deux plis, les motifs de marquage et de gaufrage étant situés sur le même pli ou sur des plis différents.

Les exemples qui suivent illustrent le procédé selon l'invention. A un certain mode de réalisation du procédé, on rattachera différents dispositifs pour la mise en oeuvre du procédé dans ce mode de réalisation déterminé.

Un premier mode de réalisation simple du procédé selon l'invention est illustré par la figure 6.

Suivant le schéma représenté à la figure 6, le procédé consiste dans une première étape, à gaufrer un premier pli 10 d'ouate de cellulose entre un premier cylindre gravé en matériau dur 1001 et un premier contre-cylindre 1002 ici en matériau déformable par exemple en caoutchouc de manière à gaufrer 1a zone centrale des produits selon l'invention au niveau du premier pli. Dans une seconde étape, un second pli d'ouate de cellulose 11 est superposé au premier pli gaufré 10 et les deux plis sont marqués ensemble de manière à être liés, entre le premier cylindre gravé en matériau dur 1001 et un second cylindre en matériau dur lisse 1003 (c'est-à-dire un cylindre dont la surface n'est pas gravée). Le premier cylindre 1001 est gravé, entre-autres, sur des surfaces correspondant aux zones périphériques 2 des produits en formats selon l'invention. Les deux plis 10 et 11, dans la zone périphérique des formats, subissent une pression nécessaire à la liaison. Cette pression est exercée par le système formé du premier cylindre gravé 1001 et du second cylindre lisse en matériau dur 1003. Ce principe se retrouve dans tous les procédés de l'invention décrits ci-après. Les deux plis à l'issue de cette étape de marquage sont liés au moins dans la zone périphérique 2. Les produits sont ensuite découpés en formats. Le produit fabriqué par ce procédé est illustré par la figure 2A.

Le dispositif permettant la mise en oeuvre du procédé ci-dessus est illustré par l'ensemble des trois cylindres représentés sur la figure 6. Le premier cylindre gravé 1001 est en acier et comprend en surface des zones gravées 1004 correspondant aux motifs de gaufrage 12 de la zone centrale 7 des produits en format. Il comprend aussi entre les zones gravées 1004, des zones gravées 1005 correspondant aux motifs de marquage 9 de la zone périphérique 2 des produits en format.

Sur cette figure et toutes les figures suivantes en coupe illustrant les procédés et les dispositifs de l'invention, les zones gravées correspondant aux motifs de marquage sont illustrées par la présence de deux points 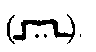 .

Le contre-cylindre ou cylindre récepteur 1002 du premier cylindre gravé 1001 est en matériau déformable par exemple en caoutchouc et comprend des zones évidées 1006 venant se positionner en face des zones gravées 1005 du premier cylindre gravé 1001 correspondant aux motifs de marquage 9 de la zone périphérique 2 des produits en formats. Le second cylindre en matériau dur 1003 est en acier ou autre matériau non déformable.

En référence à la figure 6A, le premier cylindre gravé en matériau dur 1001 comporte deux niveaux de gravure : un premier niveau pour les zones gravées 1004 correspondant aux motifs de gaufrage 12 de la zone centrale 7 des produits en format et un second niveau pour les zones gravées 1005 correspondant aux motifs de marquage 9 de la zone périphérique 2 des produits en format. Suivant la figure 6B, le premier contre-cylindre 1002 en matériau déformable par exemple en caoutchouc, comprend des zones évidées 1006 dans lesquelles viennent s'insérer les zones gravées de marquage 1005 du premier cylindre gravé 1001 lorsque les deux cylindres sont appliqués l'un contre l'autre lors de l'étape de gaufrage. Il est à noter que ces zones gravées 1005 ne sont pas appliquées directement contre les zones évidées 1006.

La figure 6C illustre les hauteurs des zones gravées des premiers cylindre gravé et second cylindre en matériau dur lisse et/ou gravé des dispositifs selon l'invention.

La zone G correspond à la surface des cylindres destinée au gaufrage de la zone centrale des produits en format et la zone M correspond à la surface des cylindres destinée au marquage de la zone périphérique des produits en format.

Les zones gravées des cylindres présentent des parties proéminentes ou en relief. La hauteur de gravure, par exemple h₁ d'une partie en relief est définie par la distance entre la surface S de cette partie en relief et l'axe central du cylindre suivant une direction perpendiculaire à la surface précitée.

h₁ est la hauteur de gravure de la zone gravée du premier cylindre gravé correspondant aux motifs de gaufrage de la zone centrale des produits en format.

h₂ est la hauteur de gravure de la zone gravée du premier cylindre gravé correspondant aux motifs de marquage de la zone périphérique.

h₃ est la hauteur de gravure de la zone non gravée ou gravée du second cylindre dur ou gravé correspondant à la zone centrale du produit en format.

Et h₄ est la hauteur de gravure de la zone non gravée ou gravée du second cylindre correspondant à la zone périphérique.

La figure 6D illustre les hauteurs des différentes zones gravées 1004 et 1005 du premier cylindre gravé 1001 appliqué contre le second cylindre en matériau dur 1003 du dispositif représenté en figure 6. Dans la zone gravée 1004 correspondant aux motifs de gaufrage 12 de la zone centrale 7 des produits en format, les parties en relief de la gravure ont une hauteur h₁. Dans la zone gravée 1005 correspondant aux motifs de marquage 9 de la zone périphérique 2 des produits en formats, les parties en relief de la gravure ont une hauteur h₂. h₂ est strictement supérieure à h₁. Les hauteurs h₃ et h₄ sont égales.

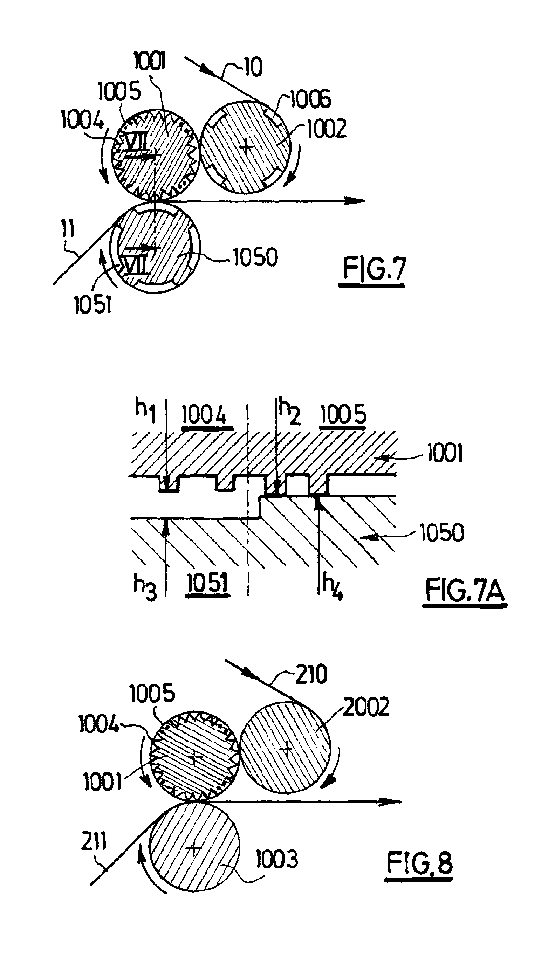

Une variante du dispositif représenté à la figure 6 est illustrée par la figure 7. Le produit obtenu est illustré par la figure 2A.

Le procédé est identique à celui décrit en référence à la figure 6. La différence réside dans le second cylindre dur 1050 du dispositif qui comprend des zones lisses évidées 1051 dans lesquelles viennent s'insérer les zones 1004 du premier cylindre gravé. Ces dernières ne sont pas directement appliquées l'une contre l'autre.

La figure 7A illustre les hauteurs respectives des parties en relief du premier cylindre gravé appliqué contre le second cylindre dur du dispositif représenté en figure 7.

Le premier cylindre gravé 1001 comprend dans ses zones gravées 1004 des parties en relief ayant une hauteur h₁ et dans ses zones gravées 1005, des parties en relief ayant une hauteur h₂. h₂ est supérieure ou égale à h₁. Le second cylindre 1050 en acier comprend des zones évidées 1051 créant ainsi une partie en creux lisse ayant une hauteur h₃, et une partie lisse ayant une hauteur h₄ dans la zone du cylindre 1050 venant se positionner en face des parties en relief de la zone gravée 1005 du premier cylindre gravé 1001 correspondant aux motifs de marquage 9 de la zone périphérique 2 des produits en format. La somme des hauteurs h₂ et h₄ est strictement supérieure à la somme des hauteurs h₁ et h₃.

En référence à la figure 8, le procédé consiste à gaufrer le premier pli d'ouate de cellulose 210 entre le premier cylindre gravé en matériau dur 1001 et le premier contre-cylindre en matériau déformable 2002. Ce premier pli 210 est gaufré dans la zone centrale 207 du produit en format et également dans la zone périphérique 202 du produit en format. Le second pli 211 est ensuite rapporté sur le premier pli 210 gaufré et les deux plis sont marqués entre le premier cylindre gravé en matériau dur 1001 et le second cylindre lisse en matériau dur 1003. Dans cette étape de marquage, les deux plis sont marqués suivant tout ou partie du motif de gaufrage du premier pli dans la zone périphérique du produit en format.

Un produit fabriqué par ce procédé est illustré par la figure 3. En effet, on peut voir que dans la zone périphérique 202 du produit en format, les motifs 214 sont à la fois des motifs de gaufrage et des motifs de marquage.

Concernant le dispositif, le second cylindre dur 1003 ici est parfaitement lisse ainsi que le contre-cylindre 2002 en matériau déformable.

La figure 6D illustre les hauteurs h₁ et h₂ des parties en relief respectivement des zones gravées 1004 et 1005 du premier cylindre gravé 1001 appliqué contre le second cylindre dur lisse 1003.

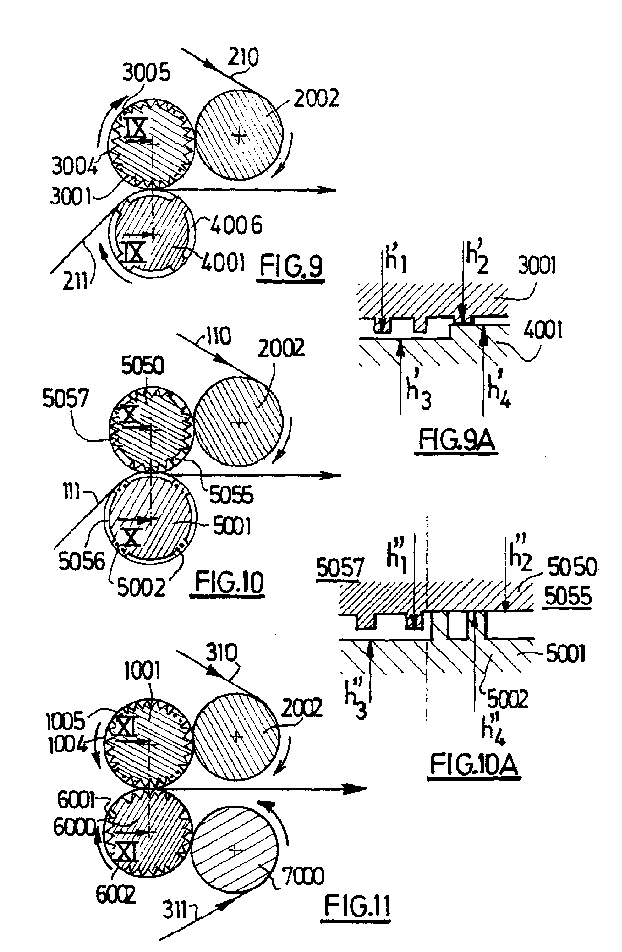

Le dispositif représenté à la figure 9 est une variante de celui représenté à la figure 8. Il se distingue par le second cylindre dur 4001, en acier qui comprend des zones évidées 4006 qui viennent se positionner en face des zones gravées 3004 du premier cylindre gravé 3001, correspondant à la zone centrale 207 des produits en format.

Les hauteurs h'₁ et h'₂ des parties en relief des zones gravées 3004 et 3005 du premier cylindre gravé 3001 et les hauteurs h'₃ et h'₄ de la partie en relief du second cylindre dur 4001 sont illustrées par la figure 9A qui représente la configuration des premier cylindre gravé 3001 et second cylindre dur 4001 appliqués l'un contre l'autre lors de l'étape de marquage en coupe partielle transversale suivant la ligne IX-IX de la figure 9.

h'₂ est inférieure ou égale à h'₁, h'₃ est strictement inférieure à h'₄ et la somme des hauteurs h'₂ et h'₄ est strictement supérieure à la somme des hauteurs h'₁ et h'₃.

Le produit issu d'une fabrication au moyen de ce dispositif peut être illustré par le produit représenté en figure 3.

A la différence du dispositif représenté à la figure 8 et en référence à la figure 10, le second cylindre dur 5001 peut être gravé dans les zones 5002 correspondant aux motifs de marquage 109 de la zone périphérique 102 des produits en format. Le cylindre 5050 comprend des zones lisses évidées 5055 venant se positionner en face des zones gravées 5002 du second cylindre dur gravé 5001. Le cylindre 5001, entre les zones gravées 5002, comporte des zones évidées 5056.

La figure 10A montre la hauteur des parties en relief des zones : h"₁ pour la zone gravée 5057 et h"₂ pour la zone plane 5055 du premier cylindre gravé 5050, h"₃ pour la zone plane et lisse 5056 et h"₄ pour la zone gravée 5002 du second cylindre dur gravé 5001. h"₂ est strictement inférieure à h"₁ et h"₃ strictement inférieure à h"₄. La somme des hauteurs h"₂ et h"₄ est strictement supérieure à la somme des hauteurs h"₁ et h"₃.

Ainsi, le premier cylindre gravé 5050 aura pour fonction de gaufrer et participer au marquage en liaison avec le second cylindre gravé dur 5002 qui lui, aura pour unique fonction celle de marquer.

Le produit en résultant est illustré par la figure 2B. Dans la zone périphérique 102 du produit en format, c'est le second pli 111 qui est enfoncé par le cylindre 5001 et dans une moindre mesure le premier pli superposé 110.

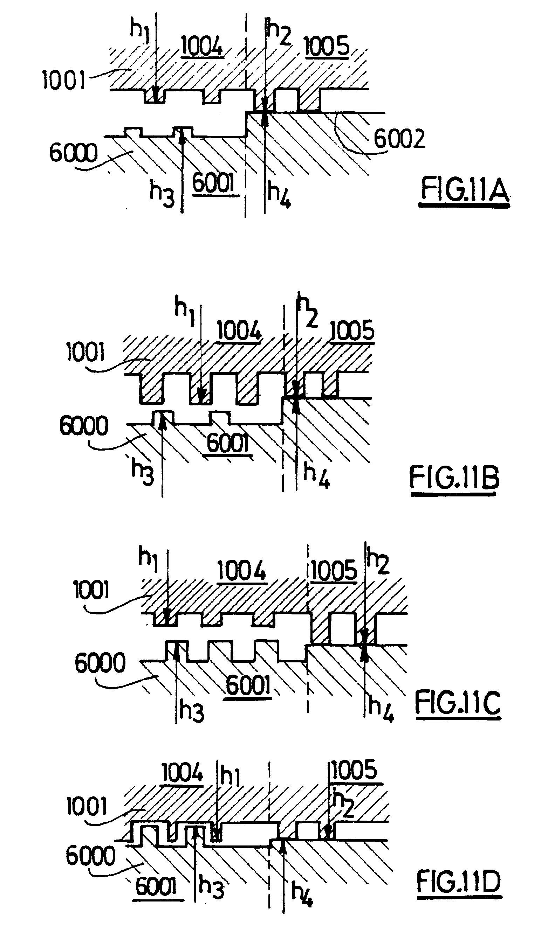

Un autre mode de réalisation du procédé selon l'invention est illustré par la figure 11. Ce procédé consiste à gaufrer le premier pli d'ouate de cellulose 310 entre le premier cylindre gravé en acier 1001 et le contre-cylindre 2002 lisse en matériau déformable, au moins dans une zone centrale 307 des produits en format, gaufrer le second pli 311 entre le second cylindre gravé en matériau dur 6000 et un second contre-cylindre en matériau déformable 7000, au moins dans la zone centrale 307 des produits en format, puis superposer les deux plis séparément gaufrés et les marquer entre le premier cylindre gravé 1001 et le second cylindre dur 6000, et enfin découper les produits en formats.

Le premier cylindre gravé 1001 est similaire au cylindre représenté en figure 6A comprenant deux niveaux de gravure. Un premier niveau de gravure correspond à la zone gravée 1004 destinée aux motifs de gaufrage 312 de la zone centrale 307 des produits en format. Le second niveau de gravure correspond à la zone gravée 1005 destinée aux motifs de marquage 314 qui, ici, sont aussi des motifs de gaufrage de la zone périphérique des produits en format.

Le second cylindre gravé 6000 comprend des zones gravées 6001 pour le gaufrage des motifs de la zone centrale 307 du second pli 311 et des zones planes non gravées 6002 correspondant à la zone périphérique 302 des produits en format.

Les gravures des zones 1004 et 6001 des cylindres 1001 et 6000 peuvent être identiques ou différentes. Les cylindres 1001 et 6000 doivent être synchronisés de manière à ce que l'on puisse superposer les deux plis gaufrés en position "pointe-pointe" ou décalée du type "nested".

Un produit obtenu par un procédé pointe-pointe est illustré par la figure 4A. Dans ce mode de réalisation, le produit est réalisé par des cylindres gravés ou gaufreurs en position pointe-pointe.

Les figures 11A à 11D montrent différentes possibilités de répartition des hauteurs de gravure sur les deux cylindres gravés du dispositif suivant la figure 11.

Le premier cylindre gravé 1001 comprend des zones gravées 1004 dont les parties en relief ont une hauteur h₁ correspondant aux motifs de gaufrage 312 de la zone centrale 307 des produits en format pour le premier pli et des zones gravées 1005 dont les parties en relief ont une hauteur h₂ correspondant aux motifs de gaufrage et marquage 314 de la zone périphérique 302 des produits en formats.

Le second cylindre gravé 6000 comprend des zones gravées 6001 dont les parties en relief ont une hauteur h₃ correspondant aux motifs de gaufrage 316 de la zone centrale 307 des produits en format pour le second pli 311 et des zones non gravées 6002, lisses, ayant une hauteur h₄ et correspondant à la zone périphérique 302 des produits en format.

Pour toutes les possibilités illustrées par les figures 11A à 11C, la somme des hauteurs h2 et h4 est strictement supérieure à la somme des hauteurs h₁ et h₃.

Suivant la figure 11A, lorsque h₂ est égale à h₁, h₄ est strictement supérieure à h₃ et lorsque h₂ est strictement supérieure à h₁, h₄ est supérieure ou égale à h₃.

Suivant la figure 11B, lorsque h₂ est égale à h₁, h₄ est strictement supérieure à h₃ et lorsque h₂ est strictement inférieure à h₁, h₄ est supérieure ou égale à h₃.

Suivant la figure 11C, lorsque h₂ est égale à h₁, h₄ est strictement inférieure à h₃ et lorsque h₂ est strictement supérieure à h₁, h₄ est inférieure ou égale à h₃.

La figure 11D illustre la position "nested" pour l'association des deux plis gaufrés au moyen des cylindres gravés 1001 et 6000. h₂ est inférieure ou égale à h₁ et h₄ est inférieure ou égale à h₃. La somme des hauteurs h₂ et h₄ est strictement supérieure à h₁ et strictement supérieure à h₃.

En inversant sur la figure 11, les cylindres 1001 et 6000, on obtient le produit illustré par la figure 4B.

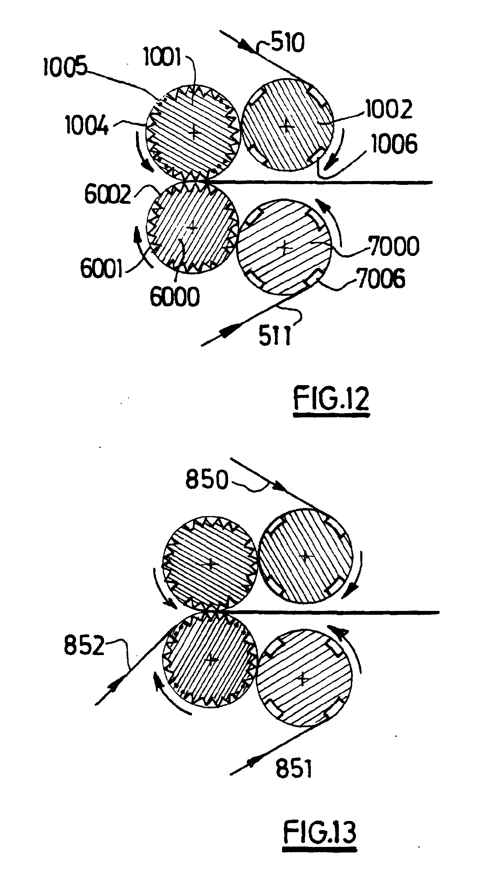

Suivant la figure 12, le premier pli 510 est gaufré entre le premier cylindre gravé en matériau dur 1001 et le premier contre-cylindre 1002 en matériau déformable dans la zone centrale des produits en format. Parallèlement, le second pli 511 est également gaufré entre le second cylindre gravé en matériau dur 6000 et le second contre-cylindre 7000 en matériau déformable dans la zone centrale des produits en format. Les deux plis 510 et 511 sont ensuite superposés et marqués entre le premier cylindre gravé 1001 et le second cylindre gravé 6000 dans la zone périphérique 502 des produits en format. Enfin, les produits sont découpés en formats.

Le premier cylindre gravé du dispositif représenté à la figure 12 comprend des zones gravées 1004 correspondant aux motifs de gaufrage 512 de la zone centrale 507 des produits en formats et des zones gravées 1005 correspondant aux motifs de marquage 509 de la zone périphérique 502 des produits en formats.

Le contre-cylindre 1002 en matériau déformable comprend des zones évidées 1006 venant se positionner au niveau des zones gravées 1005 du premier cylindre gravé 1001 correspondant aux motifs de marquage 509 de la zone périphérique 502 des produits en format, lorsque les deux cylindres sont appliqués l'un contre l'autre.

Ainsi, le premier pli 510 n'est pas gaufré dans la zone périphérique 502.

Le second cylindre gravé 6000 comprend des zones gravées 6001 correspondant aux motifs de gaufrage 512 de la zone centrale 507 des produits en format et des zones non gravées 6002 correspondant à la zone périphérique 502 des produits en format. Ces zones lisses non gravées 6002 viennent se positionner en face des zones gravées 1005 du premier cylindre gravé 1001, qui sont destinées au marquage de la zone périphérique 502 des produits en formats.

Le second contre-cylindre 7000 en matériau déformable comprend également des zones évidées 7006 qui viennent se positionner au niveau des zones lisses non gravées 6002 du second cylindre gravé 6000 lorsque les deux cylindres sont appliqués l'un contre l'autre si bien que le second pli n'est pas gaufré non plus dans la zone périphérique 502 des produits en formats.

Le cylindre gravé 1001 peut être du type de celui représenté en figure 6A, et comprend deux niveaux de gravure. Les contre-cylindres 1002 et 7000 sont du type de celui représenté en figure 6B sur lequel des zones de matériau déformable 1006 ou 7006 ont été évidées.

Les deux cylindres gravés 1001 et 6000 en position de fonctionnement pour la mise en oeuvre du procédé, peuvent être illustrés par les figures 11A à 11D qui montrent les répartitions entre les différentes hauteurs h₁, h₂ , h₃ et h₄ des parties en relief des zones gravées.

Des produits issus d'un tel procédé sont illustrés par les figures 4C et 4E.

Lorsque les deux cylindres gravés 1001 et 6000 sont en position pointe-pointe, le produit obtenu est représenté par la figure 4C. Et lorsque les deux cylindres gravés 1001 et 6000 sont en position "nested", le produit obtenu est représenté par la figure 4E.

En inversant sur la figure 12, les cylindres 1001 et 6000, on obtient un produit illustré par les figures 4D et 4F correspondant respectivement à des cylindres gravés 6000 et 1001 appliqués l'un contre l'autre, en position "pointe-pointe" et en position "nested".

La figure 13 est une variante dans laquelle un troisième pli lisse ou gaufré 852 est introduit à l'étape de marquage entre les deux plis gaufrés 850 et 851. Le troisième pli 852 pourrait aussi être introduit à l'étape de marquage des procédés illustrés aux figures 11 et 12.

Le produit obtenu suivant le procédé illustré par la figure 13, est représenté en figure 4G.

L'invention a pour objet un autre procédé permettant d'effectuer simultanément les étapes de gaufrage et marquage.

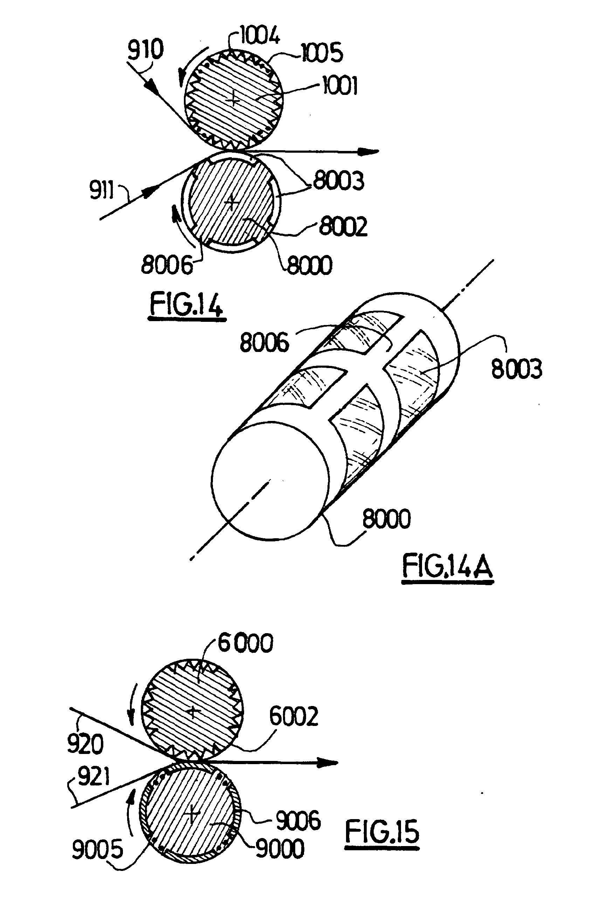

Suivant la figure 14, ce procédé consiste à gaufrer simultanément les premier et second plis 910 et 911 entre le premier cylindre gravé 1001 et un contre-cylindre 8000 au moins dans une zone centrale 907 du format, marquer simultanément à l'étape de gaufrage les premier et second plis 910 et 911 entre le premier cylindre gravé 1001 et le second contre-cylindre 8000 comprenant des surfaces dures lisses 8002 dans des zones correspondant aux motifs de marquage 909 de la zone périphérique 902 et des zones déformables 8003 correspondant aux zones gravées de gaufrage 1004.

Plus précisément, en référence à la figure 14, les premier et second plis 910 et 911 sont superposés et passent entre un cylindre gravé en matériau dur en acier 1001 comprenant des zones gravées 1004 correspondant aux motifs de gaufrage 919 de la zone centrale 907 des produits en formats et un contre-cylindre 8000 comprenant des zones de surface non gravées 8003 en matériau déformable tel qu'en caoutchouc, venant se positionner en face des zones gravées 1004 du premier cylindre gravé 1001 lorsque les deux cylindres 1001 et 8000 sont appliqués l'un contre l'autre pour la mise en oeuvre du procédé. Les deux plis 910 et 911 sont ainsi gaufrés ensemble et associés dans la zone centrale 907 des produits en formats. Suivant un autre mode de réalisation non représenté, les zones de surface non gravées lisses 8003 peuvent être remplacées par des zones gravées en matériau dur.

Par ce même passage entre le cylindre gravé 1001 en acier et le contre-cylindre 8000, les deux plis sont marqués. Le cylindre gravé 1001 comprend des zones gravées 1005 correspondant aux motifs de marquage 909 de la zone périphérique 902 des produits en format. Le cylindre 8000 comprend des zones dures lisses non gravées 8006. Le cylindre 1001 peut être gravé à deux niveaux comme le cylindre gravé représenté en figure 6A.

Par contre, le contre-cylindre 8000 représenté en figure 14A, est en acier ou tout matériau dur similaire. Il comprend des zones évidées ou creuses qui ont été comblées par des inserts 8003 en matériau déformable tel que le caoutchouc, assurant ainsi la contrepartie lisse déformable pour l'étape de gaufrage.

Les surfaces restantes 8006 du contre-cylindre 8000 sont dures et lisses et participent au marquage.

Le produit ainsi obtenu est illustré par la figure 5A.

Sur le dispositif suivant la figure 15, c'est le contre-cylindre 9000 qui comprend des zones gravées 9005 correspondant aux motifs de marquage 929 de la zone périphérique des produits en format. Le cylindre gravé 6000 comprend quant à lui des zones dures non gravées 6002 venant se positionner en face des zones gravées 9005 du cylindre 9000 lorsque les deux cylindres sont appliquées l'un contre l'autre pour la mise en oeuvre du procédé.

Le cylindre 9000 comprend également des inserts 9006 en matériau déformable assurant la contre-partie lisse pour l'étape de gaufrage.

Le produit ainsi obtenu est illustré par la figure 5B.

De manière générale, tous les cylindres gravés en acier décrits précédemment pour les dispositifs selon l'invention peuvent être réalisés dans d'autres matériaux présentant des duretés similaires et des propriétés similaires. De même, les contre-cylindres en tout matériau déformable présentent des caractéristiques de résilience souhaitées.

Dans le cas des cylindres gravés, il est aussi possible d'utiliser des plaques gravées rapportées pour la partie des cylindres gravés réalisant le gaufrage de la zone centrale.

De même, les cylindres en matériau dur, gravés ou lisses, peuvent comporter des bandes de roulement situées aux extrémités des cylindres, qui permettent de limiter les chocs liés aux variations des surfaces des motifs.

## Revendications

1. Produit en papier absorbant tel que serviette ou mouchoir comprenant au moins deux plis d'ouate de cellulose superposés et associés, découpés ou prédécoupés au format souhaité et liés entre eux le long d'au moins une partie d'une zone périphérique, **caractérisé en ce que** lesdits plis sont liés le long de ladite partie par des motifs de marquage sans collage et **en ce qu'**au moins un pli comprend des motifs de gaufrage dans une zone centrale.

2. Produit selon la revendication 1, **caractérisé en ce que** les deux plis comprennent des motifs de gaufrage dans la zone centrale.

3. Produit selon la revendication 2, **caractérisé en ce que** les deux plis comprennent des motifs de gaufrage identiques ou différents dans la zone centrale.

4. Produit selon l'une des revendications précédentes, **caractérisé en ce que** les parties les plus étroites des reliefs des motifs de gaufrage sont orientées vers l'intérieur des plis.

5. Produit selon l'une des revendications précédentes, **caractérisé en ce que** dans la zone périphérique, au moins un des plis ne comprend que des motifs de marquage.

6. Produit selon l'une des revendications 1 à 4, **caractérisé en ce que** dans la zone périphérique, au moins un des plis comprend des motifs de marquage en partie ou totalement identiques aux motifs de gaufrage.

7. Produit selon l'une des revendications précédentes, **caractérisé en ce que** les motifs de marquage dans la zone périphérique forment des filigranes.

8. Produit selon l'une des revendications précédentes, **caractérisé en ce que** la zone centrale comprend de plus des motifs de marquage en filigrane.

9. Produit selon la revendication 1, **caractérisé en ce que** les deux plis sont associés par gaufrage dans la zone centrale.

10. Produit selon l'une des revendications précédentes, **caractérisé en ce que** la zone centrale d'un pli comprend un décor formé par la combinaison de parties gaufrées et de parties non gaufrées.

11. Procédé pour fabriquer un produit en papier absorbant découpé ou prédécoupé en format selon la revendication 1, **caractérisé en ce qu'**il consiste à :
- a1) gaufrer un premier pli d'ouate de cellulose entre un premier cylindre gravé et un premier contre-cylindre au moins dans une zone centrale du format,
- b) superposer un second pli et lier les deux plis le long d'une zone périphérique du format par marquage entre le premier cylindre gravé ou non gravé dans les zones correspondant à la zone périphérique et un second cylindre en matériau dur, respectivement non gravé ou gravé dans les zones correspondant à la zone périphérique, de manière à obtenir une liaison des plis, et
- c) découper ou prédécouper en formats.

12. Procédé selon la revendication 11, **caractérisé en ce que** le procédé comprend, entre l'étape a1) et l'étape b), une étape supplémentaire a2) consistant à gaufrer le second pli entre le second cylindre dur, gravé au moins dans la zone centrale du format, et un second contre-cylindre.

13. Procédé selon la revendication 11 ou 12, **caractérisé en ce qu'**à l'étape a1), le premier pli est aussi gaufré dans la zone périphérique du format entre le premier cylindre gravé et le premier contre-cylindre et **en ce qu'**à l'étape b) lesdits premier et second sont marqués suivant tout ou partie du motif de gaufrage du premier pli dans la zone périphérique du format.

14. Procédé pour fabriquer un produit en papier absorbant découpé en format selon la revendication 9, **caractérisé en ce qu'**il consiste à :
a1) gaufrer simultanément les premier et second plis entre un premier cylindre gravé comprenant des zones gravées correspondant aux motifs de gaufrage de la zone centrale du format et un premier contre-cylindre comprenant des zones de surface non gravées en matériau déformable ou des zones de surface gravées en acier ou matériau similaire venant se positionner en face des zones gravées du premier cylindre gravé correspondant aux motifs de gaufrage de la zone centrale du format,
b) marquer simultanément à l'étape a1) les premier et second plis entre le premier cylindre comprenant des zones gravées ou non gravées correspondant aux motifs de marquage de la zone périphérique et le premier contre-cylindre comprenant des zones de surface dures respectivement non gravées ou gravées venant se positionner en face des zones respectivement gravées ou non gravées du premier cylindre, et
c) découper ou prédécouper en formats.

15. Dispositif pour la mise en oeuvre du procédé selon la revendication 11, **caractérisé en ce qu'**il comprend :
- un premier groupe de cylindres comprenant un premier cylindre gravé en matériau dur et un premier contre-cylindre en matériau déformable, le premier cylindre gravé comprenant une première zone gravée correspondant aux motifs de gaufrage de la zone centrale du format pour le premier pli et présentant une hauteur de gravure h₃ et une seconde zone gravée correspondant aux motifs de marquage de la zone périphérique du format et présentant une hauteur de gravure h₂, et
- un second groupe de cylindres comprenant un second cylindre gravé en matériau dur et un second contre-cylindre en matériau déformable, le second cylindre gravé comprenant une première zone gravée correspondant aux motifs de gaufrage de la zone centrale du format pour le second pli et présentant une hauteur de gravure h₃ et une seconde zone non gravée correspondant à la zone périphérique du format et présentant une hauteur h₄, la somme des hauteurs h₂ et h₄ étant supérieure à la somme des hauteurs h₁ et h₃.

16. Dispositif pour la mise en oeuvre du procédé selon la revendication 11, **caractérisé en ce qu'**il comprend :
- un premier groupe de cylindres comprenant un premier cylindre gravé en matériau dur et un contre-cylindre en matériau déformable, le premier cylindre gravé comprenant une première zone gravée correspondant aux motifs de gaufrage de la zone centrale du format pour le premier pli et présentant une hauteur de gravure h₁ ou h'₁ et une seconde zone gravée correspondant aux motifs de marquage de la zone périphérique du format et présentant une hauteur de gravure h₂ ou h'₂, et
- un second cylindre en matériau dur comprenant une première zone lisse correspondant à la zone centrale du format présentant une hauteur h₃ ou h'₃ et une seconde zone lisse correspondant en tout ou partie à la zone périphérique et présentant une hauteur h₄ ou h'₄, cette seconde zone étant destinée à se positionner en face des zones gravées du premier cylindre gravé correspondant aux motifs de marquage, la somme des hauteurs h₂ ou h'₂ et respectivement h₄ ou h'₄ étant strictement supérieure à la somme des hauteurs h₁ ou h'₁ et respectivement h₃ ou h'₃.

17. Dispositif pour la mise en oeuvre du procédé selon la revendication 11, **caractérisé en ce qu'**il comprend :
- un premier groupe de cylindres comprenant un premier cylindre gravé en matériau dur et un premier contre-cylindre en matériau déformable, le premier cylindre gravé comprenant une première zone gravée correspondant aux motifs de gaufrage de la zone centrale du format pour le premier pli et présentant une hauteur de gravure h"₁ et une seconde zone plane correspondant à la zone périphérique du format présentant une hauteur h"₂, h"₂ étant inférieure à h"₁, et
- un second cylindre gravé en matériau dur comprenant une première zone lisse correspondant à la zone centrale du format, présentant une hauteur h"₃, et une seconde zone gravée correspondant aux motifs de marquage de la zone périphérique du format et présentant une hauteur de gravure h"₄, h"₃ étant strictement inférieure à h'₄ et la somme des hauteurs h"₂ et h"₄ étant strictement supérieure à la somme des hauteurs h"₁ et h"₃.

18. Dispositif selon la revendication 15 ou 16, **caractérisé en ce que** le premier contre-cylindre comprend des zones évidées correspondant à la zone périphérique du format et destinées au marquage.

19. Dispositif selon la revendication 15, **caractérisé en ce que** le second contre-cylindre comprend des zones évidées correspondant à la zone périphérique du format.

20. Dispositif pour la mise en oeuvre du procédé selon la revendication 14, **caractérisé en ce qu'**il comprend :
- un premier cylindre gravé en matériau dur comprenant des zones gravées correspondant aux motifs de gaufrage de la zone centrale du format et des zones gravées ou non gravées correspondant aux motifs de marquage de la zone périphérique du format, et
- un premier contre-cylindre comprenant des zones de surface non gravées en matériau déformable ou des zones de surface gravées en matériau dur destinées respectivement à se positionner en face des zones gravées du premier cylindre gravé correspondant aux motifs de gaufrage de la zone centrale du format, et des zones de surface dures non gravées ou gravées destinées à se positionner en face des zones respectivement gravées ou non gravées du premier cylindre dans des zones correspondant aux motifs de marquage de la zone périphérique du format.
